# EUROPEAN PATENT APPLICATION

(11) **EP 2 660 630 A1**
(43) Date of publication of application: **06.11.2013**
(21) Application number: 13166285.0
(22) Date of filing: 02.05.2013
(51) Int. Cl.: G01V 11/00

(54) **Method and Apparatus for Electromagnetic Monitoring of Underground Formations**

(30) Priority: 04.05.2012 FR 1254108
(71) Applicant: CGGVeritas Services SA, 91300 Massy (FR)
(72) Inventor: Rondeleux, Baptiste, 91300 MASSY (FR)
(74) Representative: Regimbeau

(57) **Abstract**

An electromagnetic measurement system (100) and related methods are provided. The system includes an electromagnetic source (110) located at a predetermined depth and configured to generate electromagnetic waves in surrounding formations, and a grid of electromagnetic detectors (120) located on a surface (117) of the rock formation (115) and configured to detect the electromagnetic waves generated by the electromagnetic source and reflected by an underground hydrocarbons reservoir (130). The system also includes a data processing unit (140) configured to process first data and second data related to the electromagnetic waves detected by the grid of electromagnetic detectors, to extract changes of the underground hydrocarbon reservoir, the first data and the second data each being acquired for up to one week, at least two months apart from one another. The electromagnetic source and the grid of electromagnetic detectors are not moved or removed between when the first data was acquired and when the second data was acquired.

## Description

### BACKGROUND

### TECHNICAL FIELD

Embodiments of the subject matter disclosed herein generally relate to systems and methods for monitoring underground rock formations and, more particularly, to identifying changes by imaging hydrocarbon reservoirs using the same electromagnetic measurement setup at large time intervals.

### DISCUSSION OF THE BACKGROUND

Underground rock formations are frequently investigated using acoustic waves. However, an alternative method using electromagnetic waves to investigate underground formations is particularly efficient in differentiating rock layers that contain hydrocarbons from other, non-oil-bearing rock layers, due to the large resistivity contrast: tens of Ohm-m for rock layers that contain hydrocarbons, and about two Ohm-m for the non-oil-bearing rock layers.

One conventional method using electromagnetic measurements is known as resistivity well logging and consists of recording resistivity with respect to depth in a wellbore drilled through the investigated formations. For example, U.S. Patent No. 7,813,219 describes a logging tool that carries an electromagnetic pulse source and electrodes capable of measuring the potential difference caused by the response of the surrounding rock formation to the electromagnetic field generated by the electromagnetic pulse source.

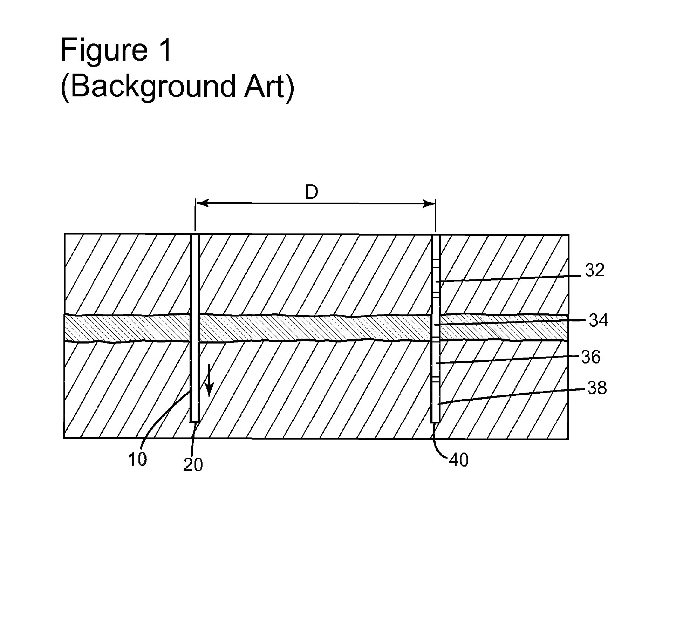

Another conventional method of investigating using electromagnetic measurements is known as crosswell monitoring. As illustrated in Figure 1, in crosswell monitoring, electromagnetic signals generated by an electromagnetic source 10 (e.g., a magnetic dipole transmitter) lowered into a first well 20, are detected by an array of receivers 32, 34, 36, 38 (e.g., magnetometers) arranged in a second well 40. The first well 20 and the second well 40 may be up to 1000 m apart. The crosswell monitoring method generates a two-dimensional image of the rock formations between the two wells. Plural two-dimensional images may be obtained by using plural pairs of wells.

None of the above-described conventional methods provides a three-dimensional (3D) image of the investigated rock formation.

One of the important goals of imaging underground rock formations is to monitor their evolution, for example, when hydrocarbons are extracted. A meaningful comparison between the current state of an investigated rock formation and a previous state thereof requires reproducing, when the current state is measured, the measurement setup (i.e., positions of the source and detectors used for measurements) used when the previous state was measured. However, differences between the current measurement setup and the previous measurement setup unavoidably occur when the detectors and/or the source are repositioned trying to reproduce the previous measurement setup.

Thus, there is a need to develop a method for four-dimensional (4D) electromagnetic monitoring of hydrocarbon reservoirs, that is, a method that would achieve, besides a 3D imaging, also a time-lapse acquisition with the same measurement setup.

### BRIEF SUMMARY OF THE INVENTION

A method for 4D electromagnetic monitoring of hydrocarbon reservoirs achieves, besides a global 3D image of the reservoirs, a time-lapse acquisition with the same measurement setup that is beneficial for evaluating changes occurring between measurements. The method is sensitive to the horizontal variation of a strong resistivity contrast (oil - water contact, CO₂ bubble, steam chamber...) at a depth that can exceed 1 or 2 km.

According to an exemplary embodiment, an electromagnetic measurement system includes an electromagnetic source, a grid of electromagnetic detectors and a data processing unit. The electromagnetic source is located at a predetermined depth inside a rock formation and is configured to generate electromagnetic waves in the surrounding rock formation. The grid of electromagnetic detectors is located on a surface of the rock formation and is configured to detect the electromagnetic waves generated by the electromagnetic source and reflected by an underground hydrocarbon reservoir. The data processing unit is configured to process first data and second data related to the electromagnetic waves detected by the grid of electromagnetic detectors to extract changes of the underground hydrocarbon reservoir, the first data and the second data each being acquired for up to one week, at more than two months from one another. The electromagnetic source and the grid of electromagnetic detectors are not moved or removed between when the first data was acquired and when the second data was acquired.

According to another exemplary embodiment, there is a method for monitoring an underground hydrocarbon reservoir. The method includes placing an electromagnetic source at a predetermined depth in a rock formation, and a grid of electromagnetic detectors on a surface of the rock formation so that the electromagnetic detectors detect electromagnetic waves generated by the electromagnetic source and reflected by the underground hydrocarbon reservoir. The method further includes (A) acquiring first data related to electromagnetic waves detected by the grid of detectors and due to electromagnetic waves generated by the electromagnetic source, for up to a week, and (B) acquiring second data related to electromagnetic waves detected by the grid of detectors and due to electromagnetic waves generated by the electromagnetic source, for up to a week, at a time interval of at least two months from when the first data was acquired. Finally, the method includes processing the first data and the second data to identify changes of the underground hydrocarbon reservoir.

According to another exemplary embodiment, there is a method for globally imaging a rock formation, including acquiring data related to electromagnetic waves reflected by interfaces between layers of different resistivity in a rock formation, using hundreds of sensors in a two-dimensional arrangement, wherein the data is acquired for at least two distinct periods at least two months apart from one another. The method further includes correlating the data with information on the electromagnetic waves directed to the rock formation that have been reflected by the interfaces, to determine a depth of the interfaces. The method also includes generating a four-dimensional data set based on the data to monitor the evolution of the layers in the rock formation.

### BRIEF DESCRIPTION OF THE DRAWINGS

For a more complete understanding of the present invention, reference is now made to the following descriptions taken in conjunction with the accompanying drawings, in which:

Figure 1 is a schematic diagram of a measurement system for a conventional method of investigating the structure of underground formations using electromagnetic measurements;

Figure 2 is a schematic diagram of a measurement system for investigating the structure of underground formations using electromagnetic measurements according to an exemplary embodiment;

Figure 3 is a schematic diagram of a measurement system for investigating the structure of underground formations using electromagnetic and seismic measurements according to another exemplary embodiment;

Figure 4 is a flow diagram of a method for monitoring an underground hydrocarbon reservoir according to an exemplary embodiment; and

Figure 5 is a flow diagram of a method of globally imaging a rock formation according to another exemplary embodiment.

### DETAILED DESCRIPTION OF THE INVENTION

The following description of the exemplary embodiments refers to the accompanying drawings. The same reference numbers in different drawings identify the same or similar elements. The following detailed description does not limit the invention. Instead, the scope of the invention is defined by the appended claims. The following embodiments are discussed, for simplicity, with regard to the terminology and structure of an electromagnetic measurement system for investigating the structure of underground formations.

Reference throughout the specification to "one embodiment" or "an embodiment" means that a particular feature, structure or characteristic described in connection with an embodiment is included in at least one embodiment of the subject matter disclosed. Thus, the appearance of the phrases "in one embodiment" or "in an embodiment" in various places throughout the specification is not necessarily referring to the same embodiment. Further, the particular features, structures or characteristics may be combined in any suitable manner in one or more embodiments.

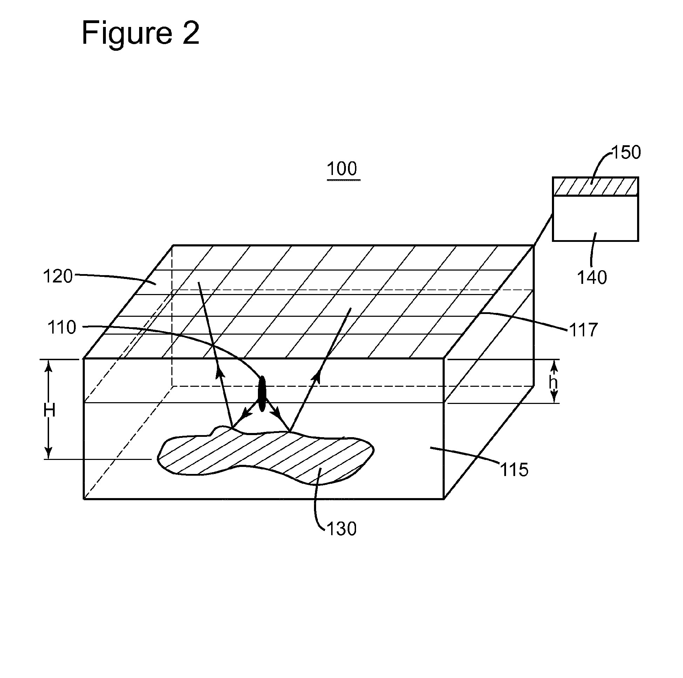

Figure 2 is a schematic diagram of a measurement system 100 for investigating the structure of rock formations using electromagnetic measurements according to an exemplary embodiment. An electromagnetic source 110 located at a known (predetermined) depth h inside the rock formation 115 generates an electromagnetic field. The depth h is generally less, but it may also be larger than the depth to the reservoir itself. The electromagnetic source 110 may include electrodes planted in the ground. Pre-existent buried electrodes may be used or, alternatively, a current up to 10 A may be injected directly into existing boreholes. The amplitude and frequency of the current is such that it can reach the target. The depth of the source, the frequency and intensity of the current are related to the depth of the target by relations well established by the state of the art.

A grid of electromagnetic detectors (receivers) 120 is disposed on the surface 117 of the investigated rock formation 115. For example, the grid 120 is made by 100 receivers per km square, the final extension of the grid being related to the depth of the target.

Natural and artificial noise is reduced by emitting electromagnetic excitations and recording electromagnetic data over a long period of time (that may reach two weeks of continuous emission). The number of time series necessary for a correct signal-to-noise ratio, which is a characteristic for the area, the depth to the target and the actual geometry, is determined before starting the actual data acquisition, by passive recording of the noise (in absence of the electromagnetic excitations) and vertical stacking of the recorded time series.

In contrast to the conventional methods in which electromagnetic data is acquired at most in ten channels using five-channel data loggers, here, data from hundreds of sensors in the grid is acquired and recorded simultaneously using seismic data loggers that can handle tens of thousands of channels.

The grid of electromagnetic detectors 120 may be located directly above the electromagnetic source 110 or may be offset relative to the source. In another embodiment, data using plural grids of electromagnetic detectors and a single electromagnetic source may be assembled to generate a 3D image of a reservoir. Alternatively, a grid of electromagnetic detectors may acquire data related to plural electromagnetic sources sequentially or simultaneously, the data being then assembled to generate the global 3D image of a reservoir.

Information (data) about the electromagnetic waves reflected by a reservoir 130 located at a depth H (where H is not necessarily less than h) is acquired by the individual electromagnetic detectors on the grid of electromagnetic detectors 120. The data is acquired over extended periods of time, e.g., up to a few weeks. The grid of electromagnetic detectors 120 and the electromagnetic source 110 remain at their location (i.e., are not moved or removed) for long periods (e.g., permanently). Thus, measurements with the same electromagnetic measurement setup may be performed at several months' (e.g., at least two months) or even years' intervals. Preserving the measurement setup provides an advantage of decreasing distortions (noise) due to repositioning the sensors.

The data related to the electromagnetic waves detected by the grid of electromagnetic detectors 120 is processed by a data processing unit 140. The data processing unit 140 may perform only an initial filtering and/or pre-processing of the data and then may store the initially filtered and pre-processed data in a memory 150 for later processing.

This electromagnetic measurement system provides the opportunity of generating a 3D imaging of the reservoir 130 due to the 2D grid of detectors 120. By acquiring data at large time intervals, this measurement system provides the opportunity of a 4D monitoring of a reservoir.

The processing unit 140 may also receive and combine data acquired during a seismic (i.e., using acoustic waves) investigation of the reservoir with the data related to the detected electromagnetic waves. The seismic measurement may be performed in parallel with the electromagnetic measurement. The seismic source and seismic receivers used for the seismic investigation may also be permanently installed to perform measurements at large time intervals using the same measurement setup.

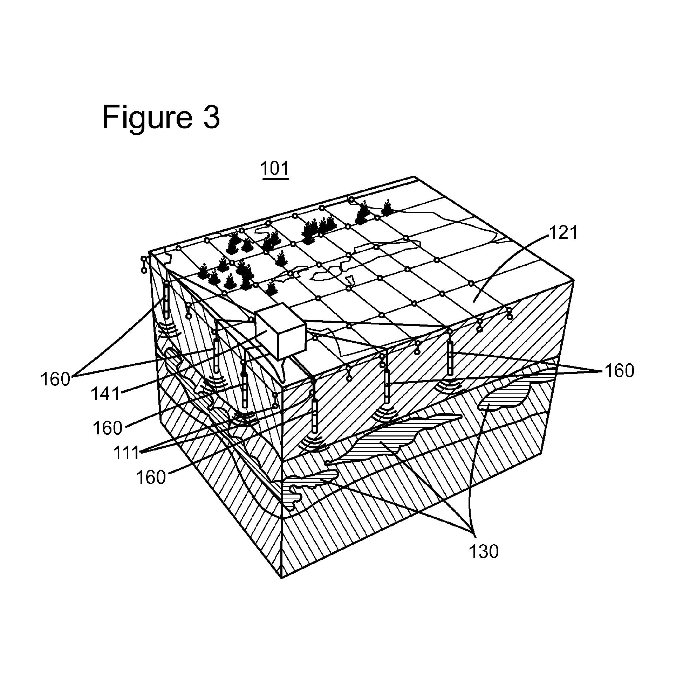

Figure 3 illustrates a measurement system 101 configured to combine an electromagnetic measurement with a seismic measurement. The measurement system 101 includes electromagnetic sources 111 and a grid of electromagnetic detectors 121 connected to a data processing unit 141. One or more seismic sources and seismic receivers 160 are placed in wells, for example, similar to the systems described in U.S. Patent 6,182,082 or 7,388,811. These seismic source(s) and receivers are configured to generate seismic waves in the rock formation and to receive reflected seismic waves, respectively. The seismic source(s) and seismic receivers are connected to the data processing unit 141. Besides being configured to process electromagnetic data, the data processing unit 141 is also configured to process seismic data comprising information on the reflected seismic waves.

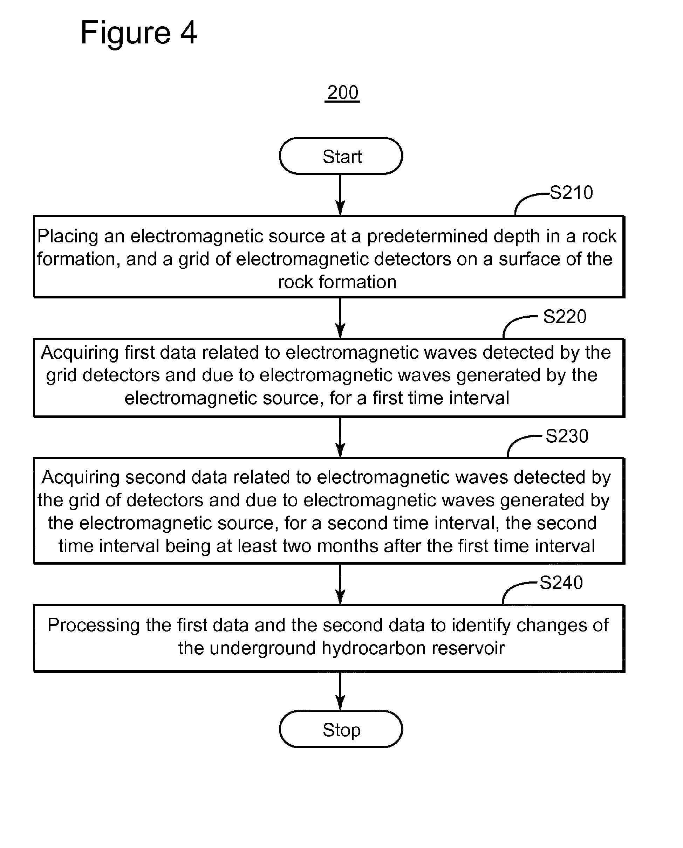

A method 200 for monitoring an underground hydrocarbon reservoir according to an embodiment is illustrated in Figure 4. The method 200 includes placing an electromagnetic source at a predetermined depth in a rock formation, and a grid of electromagnetic detectors on a surface of the rock formation, at S210. The electromagnetic source and the grid of electromagnetic detectors are arranged so that the electromagnetic detectors detect electromagnetic waves generated by the electromagnetic source and reflected by the underground hydrocarbon reservoir.

The method 200 further includes acquiring first data related to electromagnetic waves detected by the grid of detectors and due to electromagnetic waves generated by the electromagnetic source for a first time interval, at S220, and acquiring second data related to electromagnetic waves detected by the grid of detectors and due to electromagnetic waves generated by the electromagnetic source for a second time interval, the second time interval being at least two months after the first time interval, at S230.

Finally, the method 200 includes processing the first data and the second data to identify changes of the underground hydrocarbon reservoir, at S240.

Unlike the crosswell monitoring, in which substantially vertical 2D images of the reservoir between wells are generated, the method of investigating underground formations using the electromagnetic measurement setup illustrated in Figure 2 yields a global 3D image of the reservoir using the detectors located at an interface between the rock formation and air.

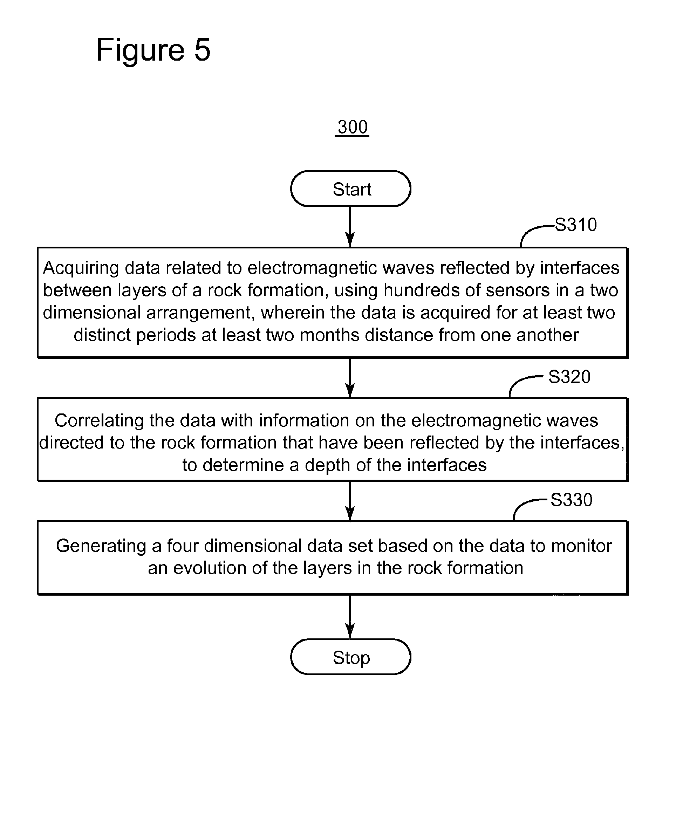

However, the above-described measurement setup may be used to globally image a rock formation regardless of whether an underground hydrocarbon reservoir is present. A flow diagram of a method 300 for globally imaging a rock formation is illustrated in Figure 5. The method 300 includes acquiring data related to electromagnetic waves reflected by interfaces between layers of different resistivity in a rock formation, using hundreds of sensors in a two-dimensional arrangement, wherein the data is acquired for at least two distinct periods at least two months apart from one another at S310.

The method 300 further includes correlating the data with information on the electromagnetic waves directed to the rock formation that have been reflected by the interfaces, to determine a depth of the interfaces at S320. The method 300 also includes generating a four-dimensional data set based on the data to monitor the evolution of the layers in the rock formation at S330.

Method 300 may further include acquiring seismic data related to seismic waves reflected by the interfaces between the layers of the rock formation, and combining the seismic data with the four-dimensional data set to identify changes of the layers in the rock formation.

The disclosed exemplary embodiments provide methods for investigating or monitoring the structure of underground formations using electromagnetic measurements. It should be understood that this description is not intended to limit the invention. On the contrary, the exemplary embodiments are intended to cover alternatives, modifications and equivalents, which are included in the spirit and scope of the invention as defined by the appended claims. Further, in the detailed description of the exemplary embodiments, numerous specific details are set forth in order to provide a comprehensive understanding of the claimed invention. However, one skilled in the art would understand that various embodiments may be practiced without such specific details.

Although the features and elements of the present exemplary embodiments are described in the embodiments in particular combinations, each feature or element can be used alone without the other features and elements of the embodiments or in various combinations with or without other features and elements disclosed herein.

This written description uses examples of the subject matter disclosed to enable any person skilled in the art to practice the same, including making and using any devices or systems and performing any incorporated methods. The patentable scope of the subject matter is defined by the claims, and may include other examples that occur to those skilled in the art. Such other examples are intended to be within the scope of the claims.

## Claims

1. A measurement system, comprising:
an electromagnetic source (110) located at a predetermined depth inside rock formation (115) and configured to generate electromagnetic waves in the rock formation;
a two dimensional grid of electromagnetic detectors (120) located on a surface of the rock formation and configured to detect the electromagnetic waves generated by the electromagnetic source (110) and reflected by an underground hydrocarbons reservoir (130); and
a data processing unit (140) configured to process first data and second data related to the electromagnetic waves detected by the grid of electromagnetic detectors to extract changes of the underground hydrocarbon reservoir (130), the first data and the second data each being acquired for respective time intervals of up to one week, at more than two months from one another,
wherein the electromagnetic source (110) and the grid of electromagnetic detectors (120) are not moved or removed between when the first data was acquired and when the second data was acquired.

2. The measurement system of claim 1, further comprising:
one or more seismic sources and seismic receivers placed in holes through the rock formation and configured to generate seismic waves in the rock formation and to receive reflected seismic waves from the underground hydrocarbons reservoir, respectively,
wherein the one or more seismic sources and seismic receivers are connected to the data processing unit, which is further configured to process seismic data comprising information on the reflected seismic waves.

3. The measurement system of claim 1, wherein the electromagnetic source, the grid of detectors and the data processing unit are configured to acquire and process the first data and the second data to observe changes of a global 3-D shape of the underground hydrocarbon reservoir.

4. The system of claim 1, wherein the electromagnetic source includes plural electromagnetic sources placed at different known locations and/or the grid of detectors includes plural grids of detectors.

5. The system of claim 1, wherein the data processing unit performs an initial filtering and/or pre-processing of the first data and the second data, and stores the initially filtered and pre-processed first data and second data in a memory.

6. The system of claim 1, wherein the data processing unit generates a four dimensional data set related to an evolution of the reservoir, based on the first data and the second data.

7. The system of claim 1, wherein the grid of detectors includes thousands of individual detectors arranged at a density of about one hundred individual detectors per kilometer square.

8. A method (200) for monitoring an underground hydrocarbon reservoir, the method comprising:
placing (S210) an electromagnetic source at a predetermined depth in a rock formation, and a grid of electromagnetic detectors on a surface of the rock formation so that the electromagnetic detectors to detect electromagnetic waves generated by the electromagnetic source and reflected by the underground hydrocarbon reservoir;
acquiring (S220) first data related to electromagnetic waves detected by the grid of detectors and due to electromagnetic waves generated by the electromagnetic source, for a first time interval;
acquiring (S230) second data related to electromagnetic waves detected by the grid of detectors and due to electromagnetic waves generated by the electromagnetic source, for a second time interval, the second time interval being at least two month after the first time interval; and
processing (S240) the first data and the second data to identify changes of the underground hydrocarbon reservoir.

9. The method of claim 8, further comprising:
placing a seismic source and seismic detectors so that the seismic detectors to detect seismic waves generated by the seismic source and reflected by the underground hydrocarbon reservoir;
acquiring first seismic data related to seismic waves detected by the seismic detectors and due to pressure waves generated by the seismic source while acquiring the first data; and
combining the first data and the first seismic data to generate a first three dimensional image of the underground hydrocarbon reservoir.

10. The method of claim 9, further comprising:
acquiring second seismic data related to seismic waves detected by the seismic detectors and due to pressure waves generated by the seismic source while acquiring the second data; and
combining the second data and the second seismic data to generate a second three dimensional image of the underground hydrocarbon reservoir.

11. The method of claim 10, wherein the seismic source and the seismic detectors are not moved or removed between when the first seismic data was acquired and when the second seismic data was acquired.

12. The method of claim 8, wherein the grid of detectors includes at least one thousand of individual detectors arranged at a density of about one hundred individual detectors per kilometer square.

13. The method of claim 8, further comprising:
generating a four dimensional data set related to an evolution of the reservoir, based on the first data and the second data.

14. A method (300) of globally imaging a rock formation, the method comprising:
acquiring (S310) data related to electromagnetic waves reflected by interfaces between layers of a rock formation, using hundreds of sensors in a two dimensional arrangement, wherein the data is acquired for at least two distinct periods at least two months apart from one another;
correlating (S320) the data with information on the electromagnetic waves directed to the rock formation that have been reflected by the interfaces, to determine a depth of the interfaces; and
generating (S330) a four dimensional data set based on the data to monitor an evolution of the layers in the rock formation.

15. The method of claim 14, further comprising:
acquiring seismic data related to seismic waves reflected by the interfaces between the layers of the rock formation; and
combining the seismic data with the four dimensional data set to identify changes of the layers in the rock formation.
